# NEUE EUROPÄISCHE PATENTSCHRIFT

(11) **EP 0 577 953 B2**
(45) Veröffentlichungstag und Bekanntmachung des Hinweises auf die Entscheidung über den Einspruch: **20.05.1998**
(45) Hinweis auf die Patenterteilung: 07.12.1994
(21) Anmeldenummer: 93107755.6
(22) Anmeldetag: 12.05.1993
(51) Int. Cl.: C09D 125/14, C09D 133/06

(54) **Holzlasur**
Wood scumble
Glacis de bois

(30) Priorität: 08.07.1992 DE 4222413
(43) Veröffentlichungstag der Anmeldung: 12.01.1994
(73) Patentinhaber: SCHULZ GmbH & Co. KG, FARBEN- UND CHEMISCHE FABRIK, W-6550 Bad Kreuznach 1 (DE)
(72) Erfinder: Marquard, Martin, D-55545 Bad-Kreuznach (DE)
(74) Vertreter: Haft, von Puttkamer, Berngruber, Czybulka

(56) Entgegenhaltungen:
- DE-A- 3 208 309
- DE-A- 3 502 944
- DE-A- 3 807 285
- DE-A- 4 200 914
- US-A- 4 299 749
- Produktinformation "News on Glycol Ether Solvents", August/September 1989
- OCCA Conference 1987 Eastbourne, J. Spauwen "Advances and application of science and technology in surface coatings"
- Productbeschreibung "DOWANOL PnB"
- Vesa P.S. Judin "Recent Advances in TiO2-Based Specialty Pigments", TiO2 '92 Conference April 14-15, 1992 in Rosemont/Illinois

## Beschreibung

Die Erfindung bezieht sich auf eine Holzlasur mit einem Ultraviolett-Absorptionsmittel.

Lignin und andere Bestandteile des Holzes führen dazu, daß sich Holz, das längere Zeit der Sonne ausgesetzt wird, stark verfärbt. Wenn das frische Aussehen junger Hölzer erhalten bleiben soll, werden daher Holzlasuren verwendet, denen ein UV-Absorptionsmittel zugesetzt ist. Die herkömmlichen UV-Absorptionsmittel für Lasuren sind aromatische oder andere organische Verbindungen. Sie führen jedoch häufig zu einer Anderung der Eigenschaften des Anstrichs. So wird, wenn eine Holzlasur mit einem herkömmlichen UV-Absorptionsmittel aufgetragen wird, die Holzoberfläche bei Erwärmung durch die Sonne meist klebrig. Ferner tritt oft eine schnelle Versprödung des Lasurfilms auf. Die Lagerstabilität der Holzlasur wird ebenfalls erheblich vermindert. Darüber hinaus sind die bekannten UV-Absorptionsmittel, die für Holzlasuren verwendet werden, meist sehr toxisch. Auch läßt ihre UV-absorbierende Wirkung noch zu wünschen übrig.

Aus der nachveröffentlichten DE-A-4.200.914 mit älterem Zeitrang ist ein wässriges Holzanstrichmittel bekannt, daß ein Acrylsäureester-Styrol-Copolymeres, 1-n-Butoxy-2-propanol und Polymethylsiloxan enthält. Das Anstrichmittel nach DE-A-4.200.914 zeichnet sich durch seine hohe Haftfestigkeit aus.

Aus DE-A-3-208.309 ist ein wässriges Entschäumungs- und Entlüftungsmittel bekannt, das ein Acrylsäureester-Styrol-Copolymeres sowie Polymethylsiloxan enthält. Ferner geht aus US-A-4.299.749 ein wässriges Fußbodenpflegemittel hervor, welches u.a. ein Copolymeres aus Acrylsäure und einem Acrylsäureester, n-Butoxy-Ethanol und Dimethylpolysiloxan als Entschäumungsmittel enthält.

Aus dem Bericht ,,Recent Advances in TiO₂-Based Specialty Pigments", vorgetragen bei der Tagung ,,TiO₂ `92" vom 14. bis 15. April 1992 in Rosemount, Illinois USA, ist ein Holzlack auf Wasserbasis mit 0,5 bis 4 % ultrafeinem Titandioxid mit einer Teilchengröße von 15 bis 50 Nanometern als UV-Absorptionsmittel bekannt.

Aufgabe der Erfindung ist es, eine Holzlasur auf Wasserbasis bereitzustellen, die bei hoher Lagerstabilität eine Verfärbung des Holzes dauerhaft verhindert.

Dies wird erfindungsgemäß mit der im Patentanspruch gekennzeichneten Holzlasur erreicht.

Nach der Erfindung wird der Holzlasur als UV-Absorptionsmittel also ein extrem feinteiliges Titandioxid mit einer mittleren Teilchengröße von weniger als 0,03 µm, zugegeben. Die Teilchengröße des Titandioxids liegt also deutlich unter der der unteren Grenze der Wellenlänge des sichtbaren Lichts, die bei 0,4 µm liegt.

Diese extrem kleine Teilchengröße dürfte der Grund sein, daß die an sich kräftige weiße Eigenfarbe von Titandioxid nicht sichtbar wird, also die Transparenz der Lasur nicht beeinträchtigt wird.

Da die feinen Titandioxidteilchen in der Lasur eine stark UV-absorbierende Wirkung besitzen, kann der Anteil des Titandioxids in der erfindungsgemäßen Lasur relativ gering sein, d.h. die Menge des Titandioxids beträgt 0,2 bis 2 %, bezogen auf das Gesamtgewicht der Lasur. Bei mehr als 2 Gew.-% nimmt die Lasur eine weißliche Farbe an, d.h. ihre Transparenz nimmt ab.

Erfindungsgemäß ist das feinteilige Titandioxid als UV-Absorptionsmittel vor allem für wasserverdünnbare Holzlasuren geeignet, also Holzlasuren, deren Lösungsmittel im wesentlichen aus Wasser besteht.

Diese Holzlasur besteht erfindungsgemäß aus einer wässerigen Acrylsäureester-Styrol-Copolymer-Dispersion. Damit sich dieses Copolymere, das das Bindemittel darstellt, ausreichend verfestigt, d.h. fest an der Holzoberfläche haftet, wird ein Filmbildner, und zwar 1-n-Butoxy-2-propanol hinzugegeben. Die erfindungsgemäße Holzlasur enthält ferner ein Entschäumungsmittel, und zwar vorzugsweise 0,2 bis 2 Gew.-% Polymethylsiloxan.

Die erfindungsgemäße Holzlasur wird, abgesehen von dem Titandioxid-Zusatz, im wesentlichen in der deutschen Patentanmeldung P 42 00 914.6 beschrieben.

Das Polymethylsiloxan besteht dabei vorzugsweise aus Monomethylsiloxan-Einheiten. Der Gehalt an dem AcrylsäureesterStyrol-Copolymerenist vorzugsweise 7 bis 12 Gew.-%. Die mittlere Teilchengröße des µdispergierten AcrylsäureesterStyrol-Copolymer-Teilchen beträgt vorzugsweise 0,01 bis 0,2 µm.

Ein Polymethylsiloxan-Gehalt von 0,3 bis 0,8 Gew.-% wird bevorzugt.

Die nachstehende Lasurzusammensetzung dient der weiteren Erläuterung der Erfindung:

| Bestandteile | Gew.-% |
|---|---|
| Wasser | 75,4 |
| wässerige Styrol-Acrylsäureester-Copolymerisat-Dispersion | 22,6 |
| 1-n-Butoxy-2-propanol | 0,75 |
| Polymethylsiloxan-Harz-Lösung | 0,75 |
| Titandioxid | 0,5 |

Als wässerige Styrol-Acrylsäureester-Copolymerisat-Dispersion wurde "Rhodopas ® DS 913" der Firma RHONE-POULENC nach der Werksnorm P2-500 F eingesetzt (Feststoffgehalt 37-39 %, Viskosität bei 23°C Brookfield RVT, 50 min⁻¹: 200-300 mPas, mittlere Teilchengröße 0,05 µm). Das Copolymerisat besteht aus 40-45 Gew.-% Styrol-Einheiten und 60 bis 55 Gew.-% Acrylsäuremethylester-Einheiten und schmilzt zwischen 50 und 87°C.

Als Polymethylsiloxan-Harz-Lösung wurde "rhodorsil H224" der gleichen Firma verwendet. Das Lösungsmittel ist ein aliphatischer Kohlenwasserstoff (Benzin). Der Polymethylsiloxan-Harz-Gehalt beträgt ca. 69 % und die kinematische Viskosität ca. 20 mm²/s. Das Siloxan-Harz besteht aus Monomethylsiloxan-Einheiten.

Das Titandioxid wird in Form einer Paste eingesetzt, die aus ca. 50 % Wasser und ca. 50 % Titandioxid mit einer mittleren Teilchengröße von 0,018 µm besteht.

Die Holzlasur dieser Zusammensetzung wird auf neues Fichtenholzbrett aufgetragen. Es wird ein farbloser, transparenter, wasserabweisender Schutzanstrich erhalten. Das so behandelte Fichtenholzbrett wurde ca. 700 h der Sonne ausgesetzt. Der farblose, transparente Schutzanstrich bleibt unverändert erhalten. Es ist nicht die geringste Verfärbung des Holzes festzustellen.

## Patentansprüche

1. Holzlasur mit mehr als 70 Gew.-% Wasser und mit 0,2 bis 2 Gew.% Titandioxid mit einer mittleren Teilchengröße von weniger als 0,03 µm, dadurch gekennzeichnet, daß sie außerdem besteht aus
7 bis 12 Gew.% eines dispergierten Acrylsäureester-Styrol-Copolymeren mit einer mittleren Teilchengröße von 0,01 bis 0,2 µm,
0,5 bis 3 Gew.% 1-n-Butoxy-2-propanol, und
0,2 bis 2 Gew.% Polymethylsiloxan.

## Claims

1. Wood scumble having more than 70% by weight water and 0,2 to 2% by weight titanium dioxide having an average particle size of less than 0,03 µm,
characterized in that it consists in addition of
7 to 12% by weight of a dispersed copolymer of an acrylic acid ester and styrene
having an average particle size of 0,01 bis 0,2 µm,
0,5 to 3% by weight 1-n-butoxy-2-propanol, and
0,2 to 2% by weight of polymethylsiloxane.

## Revendications

1. Lasure pour bois avec une teneur en eau supérieure à 70% en poids et
de 0,2 à 2% en poids d'oxyde de titane, de taille particulaire moyenne inférieure à 0,03 µm,
caractérisée en ce que laquelle consist additionellement de 7 à 12% en poids d'un copolymère ester d'acide acrylique-styrène dispersé avec une taille moyenne de 0,01 à 0,2 µm,
de 0,5 à 3% en poids de 1-n-butoxy-2-propanol, et
0,2 à 2% en poids de polyméthylsiloxane.
